# FASCICULE DE BREVET EUROPEEN

(11) **EP 3 124 378 B1**
(45) Date de publication et mention de la délivrance du brevet: **17.04.2019**
(21) Numéro de dépôt: 16178532.4
(22) Date de dépôt: 08.07.2016
(51) Int. Cl.: B64C 13/06

(54) **PALONNIER REGLABLE ET ROTATIF POUR UN AERONEF A VOILURE TOURNANTE**
EINSTELLBARER RUDERPEDALBLOCK FÜR EIN DREHFLÜGELFLUGZEUG
AN ADJUSTABLE AND ROTARY RUDDER BAR FOR A ROTARY WING AIRCRAFT

(30) Priorité: 27.07.2015 FR 1501599
(43) Date de publication de la demande: 01.02.2017
(73) Titulaire: Airbus Helicopters, 13725 Marignane Cedex (FR)
(72) Inventeur: GEMMATI, Bernard, 84360 LAURIS (FR); FEUGAS, Florian, 13220 CHATEAUNEUF LES MARTIGUES (FR); PUJOL, Christophe, 13127 VITROLLES (FR)
(74) Mandataire: GPI & Associés

(56) Documents cités:
- FR-A1- 2 660 028
- GB-A- 302 137
- US-A- 2 478 882
- US-A- 3 377 881
- US-A- 4 484 722
- US-A1- 2013 019 706
- US-A1- 2014 251 066

## Description

La présente invention est du domaine des commandes de vol d'aéronefs. Elle concerne un palonnier réglable et rotatif pour piloter les mouvements en lacet d'un aéronef et en particulier d'un aéronef à voilure tournante.

Un aéronef possède des commandes de vol permettant de commander des mouvements de rotation de l'aéronef autour de trois axes privilégiés : les axes de roulis, de tangage et de lacet.

Les mouvements autour des axes de roulis et de tangage sont traditionnellement commandés par l'intermédiaire d'un manche tenu par les mains du pilote de l'aéronef. Les mouvements autour de l'axe de lacet sont commandés à partir d'un palonnier actionné par les deux pieds du pilote par l'intermédiaire de pédales.

Pour un avion, ces mouvements sont obtenus par l'intermédiaire de gouvernes mobiles situées sur les ailes et des empennages horizontaux de l'avion. Pour les mouvements en lacet, le palonnier commande généralement le déplacement d'une gouverne de direction positionnée sur une dérive en général verticale.

Historiquement, un palonnier était souvent constitué, pour un avion, par une barre ou bien une planche munie d'un axe de rotation vertical situé au milieu de cette barre. Le pilote positionne alors chacun de ses pieds à une extrémité de la barre pour commander les mouvements en lacet de l'avion par l'intermédiaire de deux câbles reliant respectivement une extrémité de la barre et la gouverne de direction. Un tel palonnier constitue ainsi avec la gouverne de direction et les câbles une chaîne fermée.

Les mouvements du palonnier sont commandés par des déplacements des pieds et des jambes du pilote. Une action sur une extrémité de la barre formant le palonnier s'accompagne alors d'une réaction opposée sur l'autre extrémité de la barre d'une part par l'intermédiaire de la barre elle-même et d'autre par l'intermédiaire des câbles pilotant le mouvement de la gouverne de direction.

Afin d'améliorer le confort d'utilisation du palonnier, et notamment de s'adapter à la cinématique permise par les articulations des jambes et des pieds du pilote, des pédales ont été ajoutées aux extrémités de la barre. De plus, ces pédales peuvent être articulées vis-à-vis de la barre, des biellettes d'asservissement reliant respectivement une pédale à la barre, garantissant que les pédales restent parallèles l'une à l'autre.

Par la suite, le palonnier a évolué pour utiliser deux pédales indépendantes munies respectivement d'un axe de rotation horizontal et transversal. Un tel palonnier constitue alors avec la gouverne de direction et les câbles commandant le déplacement de cette gouverne de direction une chaîne ouverte. Une action sur une pédale s'accompagne alors d'une réaction opposée sur l'autre pédale provoquée uniquement par l'intermédiaire des câbles.

Par contre pour un aéronef à voilure tournante, le mouvement de l'aéronef autour de l'axe de lacet n'est généralement pas obtenu par le mouvement d'une gouverne de direction, mais par la variation du pas collectif des pales d'un rotor anticouple en lacet.

Cependant, une architecture identique à celle d'un avion a été utilisée pour l'implantation de la commande de vol en lacet sur les aéronefs à voilures tournantes initialement conçus par des concepteurs d'avions. Le palonnier d'un aéronef à voilure tournante comporte donc généralement deux pédales munies respectivement d'un axe de rotation selon la direction transversale de l'aéronef. Les pédales sont reliées à une chaîne de transmission mécanique afin de transmettre les ordres de variation du pas collectif des pales du rotor anticouple du palonnier vers le rotor anticouple.

Toutefois, une action sur une pédale de ce palonnier ne s'accompagne d'aucune réaction sur l'autre pédale générée par le rotor anticouple. De fait, une conjugaison mécanique a été ajoutée afin de relier mécaniquement les deux pédales du palonnier. De plus, une conjugaison mécanique doit également être mise en place entre le palonnier du pilote et le palonnier du co-pilote de l'aéronef. De telles conjugaisons mécaniques sont par exemple réalisées par l'intermédiaire d'un tube et de biellettes.

En outre, une fonction supplémentaire de freinage a été ajoutée au palonnier pour certains aéronefs. Cette fonction de freinage permet par l'action sur chaque pédale un freinage différentiel sur une ou plusieurs roues du train d'atterrissage de l'aéronef. Cette fonction de freinage peut être disponible sur les aéronefs à voilures tournantes disposant d'un train d'atterrissage à roues. Cette fonction de freinage permet d'une part de ralentir et d'arrêter l'aéronef au sol et d'autre part de le diriger au sol.

L'implantation d'un palonnier sur un aéronef à voilure tournante est souvent complexe, la géométrie du palonnier devant être adaptée pour chaque aéronef en fonction de la configuration mécanique de l'aéronef. Notamment, l'architecture de l'aéronef impose des contraintes, telles que la position des cadres et des longerons ainsi que la place disponible sous la plancher pour l'implantation du palonnier. De plus, le transfert mécanique des ordres de variation du pas collectif des pales du rotor anticouple ainsi que de la position et des réglages des sièges du pilote et du co-pilote sont des contraintes supplémentaires.

Dans un souci de simplification de la description, on utilisera uniquement le terme « pilote » pour désigner indifféremment un pilote ou bien un co-pilote dans la suite de la description.

De plus, afin de s'adapter à la morphologie des pilotes qui peut être extrêmement variée et d'améliorer ainsi le confort et la position de pilotage du pilote, le palonnier est aujourd'hui souvent réglable au moins selon la direction longitudinale de l'aéronef, bien que le siège soit lui-aussi réglable selon cette direction longitudinale.

En effet, l'adaptation du poste de pilotage d'un aéronef à voilure tournante à la longueur des jambes du pilote est un problème important lors de la conception des aéronefs à voilures tournantes. Cette adaptation est d'autant plus complexe qu'elle doit prendre en compte notamment la conjugaison mécanique nécessaire d'une part entre les deux pédales d'un palonnier et d'autre part entre les palonniers du pilote et du co-pilote.

On connait par exemple le document US 2008/0105790 qui décrit un palonnier dont la position des pédales est réglable selon la direction longitudinale de l'aéronef. Ce palonnier comporte des rails pour le coulissement ainsi qu'un rail cranté pour le blocage de ce coulissement par un dispositif de verrouillage. Ce palonnier est destiné à des commandes de vol électriques d'un aéronef et peut comporter un système de retour de force. Ce palonnier permet également l'utilisation de la fonction freinage.

Par ailleurs, le document US 2014/0131523 décrit un palonnier modulaire pouvant être installé directement sur le plancher d'un avion. Ce palonnier est destiné à des commandes de vol électriques et permet également l'utilisation de la fonction freinage. Ce palonnier comporte un moyen d'ajustement de la position longitudinale de chaque pédale ainsi que de son inclinaison.

On connaît également le document US 2014/0251066 qui décrit un système comportant au moins une pédale dont la position est réglable pour s'adapter à la taille d'un pilote. Ce système peut être utilisé pour commander par exemple le freinage ou bien les mouvements en lacet d'un aéronef. Ce système peut être adapté pour des commandes de vol électriques ou bien mécaniques. La position des pédales de ce système peut être ajustée longitudinalement ainsi qu'en hauteur. Pour ce réglage en hauteur, une partie de ce système, comprenant l'ajustement longitudinal des pédales, est incliné par rapport au plancher de l'aéronef afin que les pédales soient plus hautes lorsqu'elles sont plus près du siège du pilote. De la sorte, les pédales peuvent être surélevées pour un pilote de petite taille, lorsque ces pédales sont déplacées longitudinalement vers le siège du pilote. Par contre, lorsque ces pédales sont déplacées longitudinalement pour s'éloigner du siège pour un pilote de grande taille, les pédales restent proches du plancher de l'aéronef.

En outre, le document US 2478882 décrit un palonnier réglable longitudinalement comportant deux pédales, un corps de palonnier et une barre de palonnier. La barre de palonnier est liée au corps de palonnier par une liaison glissière permettant le réglage longitudinal des pédales du palonnier. Le corps de palonnier est solidaire d'un arbre vertical mobile en rotation et un jeu de bielles permet au deux pédales de rester parallèles à une direction transversale. Le palonnier peut en outre intégrer un dispositif de freinage activé lors de l'appui sur les pédales.

De plus, le document US 4484722 décrit un dispositif de translation des pédales d'un palonnier et de la barre de palonnier vis-à-vis du corps du palonnier selon l'inclinaison du siège du pilote de l'aéronef. Un système vis-écrou dont la rotation de la vis est entrainée par l'inclinaison du siège provoque le déplacement des pédales du palonnier le long de rails.

On connaît aussi le document US 3377881 qui décrit un palonnier dont la position longitudinale des pédales est réglable. Le palonnier comporte deux bielles et deux biellettes formant un parallélogramme afin de maintenir les pédales parallèles entre elles. De plus, chaque pédale est reliée à une biellette par trois bras permettant son réglage longitudinalement. Le réglage de la position d'une pédale est indépendant de celui de l'autre pédale.

Enfin, l'arrière plan technologique comporte les documents US 2013/0019706, FR 2660028 et GB 302137.

En outre, pour des commandes de vol mécaniques d'un aéronef à voilure tournante, une chaîne de transmission mécanique transmet les ordres de variation du pas collectif des pales du rotor anticouple du palonnier vers le rotor anticouple. Cette chaîne de transmission mécanique est généralement située sous le plancher de l'aéronef, une liaison mécanique reliant alors le palonnier à cette chaîne de transmission mécanique. De fait, lorsque la position du palonnier ou bien des pédales est réglable longitudinalement, une ouverture longitudinale doit être réalisée dans le plancher de l'aéronef pour permettre le déplacement de cette liaison mécanique entre le palonnier et la chaîne de transmission mécanique. Par suite, un risque existe que des corps étrangers pénètrent par cette ouverture, ces corps étrangers pouvant bloquer la chaîne de transmission mécanique entre le palonnier et le rotor anticouple.

La présente invention a alors pour objet de proposer un palonnier réglable et rotatif pour aéronef permettant de s'affranchir des limitations mentionnées ci-dessus afin d'être facilement transposable d'un aéronef à l'autre sans adaptation particulière et dont la position longitudinale des pédales est réglable sans avoir recours à une ouverture longitudinale importante dans le plancher de l'aéronef.

La présente invention vise également à simplifier les mécanismes servant à articuler les pédales d'un palonnier non seulement entre elles, mais également entre les pédales des palonniers d'un pilote et d'un co-pilote.

Selon l'invention, un palonnier réglable et rotatif pour aéronef comporte :
- une barre de palonnier,
- un corps de palonnier,
- deux pédales, liées à la barre de palonnier de part et d'autre du corps de palonnier, les deux pédales étant positionnées à une même distance D d'un plan de symétrie PS attaché au corps de palonnier,
- un dispositif de coulissement permettant à la barre de palonnier de coulisser vis-à-vis du corps de palonnier, et
- une structure, apte à être fixée à un plancher de l'aéronef.

Ce palonnier selon l'invention est remarquable en ce que le palonnier comporte un arbre solidaire du corps de palonnier et muni d'un premier axe A1 se trouvant sur le plan de symétrie PS, le corps de palonnier étant mobile en rotation vis-à-vis de la structure autour de ce premier axe A1.

Ce palonnier est notamment destiné aux commandes de vol des aéronefs et en particulier des aéronefs à voilures tournantes, ces commandes de vol pouvant être mécaniques ou bien électriques. Le premier axe A1 est de préférence perpendiculaire au plancher de l'aéronef et selon une direction verticale de l'aéronef. Un aéronef est en effet caractérisé par trois directions privilégiées, une direction longitudinale s'étendant de l'arrière de l'aéronef vers l'avant de l'aéronef, une direction verticale s'étendant de bas en haut perpendiculairement à la direction longitudinale et une direction transversale s'étendant de gauche à droite perpendiculairement aux directions longitudinale et verticale. La direction longitudinale est l'axe de roulis de l'aéronef, la direction transversale est son axe de tangage et la direction verticale est son axe de lacet.

Le palonnier réglable et rotatif selon l'invention est très facile à installer sur un aéronef grâce à son premier axe A1 de rotation vertical, contrairement aux palonniers souvent utilisés aujourd'hui dont chaque pédale a uniquement un axe de rotation horizontal.

Une pédale est positionnée de préférence à chaque extrémité de la barre de palonnier, la barre de palonnier étant sensiblement symétrique par rapport au plan de symétrie PS et comportant deux extrémités. Le pilote d'un aéronef à voilure tournante peut donc utiliser le palonnier selon l'invention pour commander la variation du pas collectif des pales d'un rotor anticouple de cet aéronef et, par suite, commander des mouvements de l'aéronef autour de son axe de lacet. Le pilote positionne alors chacun de ses pieds sur une pédale respective afin de provoquer un déplacement de la barre de palonnier. Le palonnier selon l'invention peut également être utilisé dans un avion afin de commander le déplacement d'une gouverne de direction entraînant des mouvements en lacet de l'avion.

Le palonnier selon l'invention est fixé à un plancher de l'aéronef par l'intermédiaire de la structure du palonnier en avant du siège d'un pilote selon la direction longitudinale de l'aéronef. La structure du palonnier peut être fixée à ce plancher par l'intermédiaire de moyens de fixation, tel que des vis ou des rivets.

Le dispositif de coulissement permet le coulissement de la barre de palonnier par rapport au corps de palonnier afin de régler la position des pédales par rapport au siège du pilote, et de s'adapter ainsi à la longueur de ses jambes. La direction de coulissement de la barre de palonnier par rapport au corps de palonnier est parallèle au plan de symétrie PS.

Un premier moyen de réglage de la position du pilote dans le poste de pilotage de l'aéronef est le siège qui est réglable au moins selon la direction longitudinale de l'aéronef et éventuellement selon sa direction verticale. Ce premier moyen de réglage permet notamment de régler la position du pilote afin que ses yeux soient situés à une position préférentielle dans l'aéronef lui offrant notamment une vision optimale de l'environnement extérieur à l'aéronef et des écrans de contrôle de l'aéronef. Ce premier moyen de réglage permet également de régler la position du pilote vis-à-vis des leviers de commande de vol, dont la position est fixe dans le poste de pilotage.

Le dispositif de coulissement de ce palonnier selon l'invention constitue alors un second moyen de réglage de la position du pilote dans le poste de pilotage de l'aéronef permettant d'adapter la position des pédales du palonnier à la longueur des jambes du pilote. Ce dispositif de coulissement est irréversible, c'est-à-dire qu'une action des pieds du pilote sur les pédales du palonnier ne provoque pas le coulissement de la barre de palonnier par rapport au corps de palonnier.

De fait, une fois la position des pédales du palonnier réglée par l'intermédiaire du dispositif de coulissement, aucun mouvement n'est possible entre la barre de palonnier et le corps de palonnier.

Par contre, le corps de palonnier étant mobile en rotation vis-à-vis de la structure autour du premier axe A1, une action des pieds du pilote sur les pédales provoque la rotation de la barre de palonnier et du corps de palonnier vis-à-vis de la structure et, par suite, vis-à-vis du plancher de l'aéronef autour de ce premier axe A1. Le mouvement de rotation du corps de palonnier par rapport à la structure et au plancher de l'aéronef autour de ce premier axe A1 est indépendant de la position de la barre de palonnier vis à vis du corps de palonnier selon la direction de coulissement.

Avantageusement, le palonnier selon l'invention permet de dissocier les mouvements de coulissement de la barre de palonnier pour le réglage de la position des pédales et les mouvements de rotation du corps de palonnier pour la commande des mouvements en lacet de l'aéronef.

De la sorte, le corps de palonnier a uniquement un mouvement de rotation autour du premier axe A1 par rapport à la structure du palonnier. La structure du palonnier, fixe vis-à-vis du plancher de l'aéronef, comporte alors uniquement une ouverture sensiblement circulaire permettant la rotation de l'arbre du palonnier. Une telle ouverture sensiblement circulaire peut également être présente dans le plancher.

Le palonnier selon l'invention évite ainsi la présence d'une ouverture longitudinale dans cette structure du palonnier et/ou dans le plancher pour prendre en compte le coulissement habituel de l'ensemble d'un palonnier équipé d'un axe de rotation sensiblement vertical. En conséquence, le palonnier selon l'invention améliore alors la sécurité de cette fonction palonnier en supprimant les risques de blocage du système de commande des mouvements de l'aéronef en lacet par l'intrusion de corps étrangers par cette ouverture longitudinale.

De plus, le premier axe A1 de rotation du palonnier n'est pas lié directement à la barre de palonnier et aux pédales, contrairement à un palonnier traditionnel muni d'un axe de rotation vertical, mais au corps de palonnier. Pour un tel palonnier traditionnel, l'axe de rotation vertical est généralement situé au milieu de la barre reliant les deux pédales et coulisse avec les pédales. Pour le palonnier selon l'invention, la barre de palonnier et les pédales ont un mouvement de coulissement par rapport à ce premier axe A1 lors du réglage de la position du palonnier. Par suite, la distance entre le premier axe A1 et chaque pédale est différente selon d'une part la position de ce premier axe A1 par rapport au corps de palonnier et d'autre part la position de réglage de la barre de palonnier.

En outre, la position de la barre de palonnier est réglable entre une position arrière de réglage qui est la position la plus proche du siège de l'aéronef et une position avant de réglage qui est la plus éloignée de ce siège. Le premier axe A1 est positionné de préférence plus proche de la position arrière que de la position avant.

Une telle position du premier axe A1 permet avantageusement qu'avec un réglage de la barre de palonnier proche de la position arrière, chaque pédale du palonnier décrive un arc de cercle autour de ce premier axe A1 de rayon plus faible que lorsque la barre de palonnier est proche de la position avant.

Ainsi, les mouvements suivis par les pédales s'adaptent à la longueur des jambes du pilote et à la cinématique permise par les articulations de ces jambes. En effet, il est plus facile pour un pilote ayant de grandes jambes de réaliser des arcs de cercle de rayon plus important avec ses pieds, la barre de palonnier étant à une position proche de la position avant. De même, il est plus facile pour un pilote ayant de petites jambes de réaliser des arcs de cercle de rayon plus faible, la barre de palonnier étant à une position proche de la position arrière.

Par exemple, la course de coulissement de la barre de palonnier se répartit à parts égales de part et d'autre de ce premier axe A1. De fait, le premier axe A1 est positionné à une distance égale à la moitié de cette course de coulissement de la position arrière et de la position avant.

En outre, le coulissement de la barre de palonnier par rapport au corps de palonnier peut être effectué selon une direction de coulissement située sur un premier plan P1 sensiblement perpendiculaire au plan de symétrie PS et parallèle au plancher de l'aéronef. Ce premier plan P1 est lié à la structure du palonnier.

Cependant, cette direction de coulissement peut également être inclinée par rapport au plancher de l'aéronef afin de modifier également la position verticale des pédales vis-à-vis du plancher de l'aéronef lors du réglage de la position de ces pédales. Cette direction de coulissement est de préférence inclinée de l'arrière vers l'avant de l'aéronef, c'est-à-dire que les pédales s'éloignent verticalement du plancher lorsque la barre de palonnier coulisse vers l'avant de l'aéronef en s'éloignant du siège du pilote.

Ainsi, la distance entre les pédales et le plancher est plus faible pour la position arrière de réglage de la barre de palonnier que pour la position avant de réglage de cette barre de palonnier. De fait, les pédales sont plus proches du plancher de l'aéronef en position arrière de réglage qu'en position avant de réglage.

Cette direction de coulissement est alors située sur un second plan P2 formant un angle β avec le premier plan P1. Ce second plan P2 est lié au corps de palonnier.

Cette direction inclinée de coulissement de la barre de palonnier permet notamment de s'adapter au déplacement du siège du pilote dans l'aéronef. En effet, suivant les aéronefs, le siège du pilote peut se déplacer simultanément longitudinalement et verticalement.

Cette direction inclinée peut alors permettre avantageusement que chaque pied du pilote conserve une mobilité optimale en gardant un angle entre le tibia du pilote et l'axe longitudinal de la pédale le plus constant possible, quelle que soit la position du palonnier autour du premier axe A1 ainsi qu'en fonction de la hauteur de réglage du siège et de la grandeur de la jambe du pilote.

Afin d'améliorer le confort du pilote et permettre notamment que chaque pédale s'adapte automatiquement à la position angulaire de la barre de palonnier autour du premier axe A1, chaque pédale peut être mobile en rotation autour d'un deuxième axe A2 sensiblement parallèle au premier axe A1.

De plus, afin que les positions des deux pédales autour de ce deuxième axe A2 soient liées et que les deux pédales restent parallèles en elles, le palonnier peut comporter un système d'asservissement reliant chaque pédale. Les positions des pédales peuvent ainsi être adaptées autour du deuxième axe A2 à la position des pieds du pilote quelle que soit la position angulaire du corps de palonnier autour du premier axe A1.

Ce système d'asservissement est par exemple constitué de deux biellettes d'asservissement reliant de façon connue chaque pédale à la barre de palonnier.

Le palonnier selon l'invention peut également comporter, selon le deuxième axe A2, une liaison pivot avec un palier en élastomère entre la barre de palonnier et chaque pédale. De la sorte, chaque pédale est mobile autour du deuxième axe A2, avec un débattement limité par ce palier en élastomère, mais suffisant au vu du débattement angulaire de la barre de palonnier. De plus, la raideur en torsion de ce palier en élastomère impose un faible effort résistant à un mouvement de rotation de la pédale autour de ce deuxième axe A2 qui permet à la pédale d'être recentrée à une position initiale par rapport à la barre de palonnier dès que le pilote enlève son pied de la pédale. Cet effort résistant étant faible, il ne s'oppose pas aux actions du pied du pilote.

Avantageusement, la position de chaque pédale peut ainsi être adaptée autour du deuxième axe A2 à la position du pied du pilote quelle que soit la position angulaire du corps de palonnier autour du premier axe A1 et revenir à la position initiale dès que le pilote enlève son pied de la pédale. De plus, les pédales ne sont pas contraintes pour être parallèles entre elles et les biellettes d'asservissement traditionnellement utilisées sont supprimées.

L'utilisation d'une telle liaison pivot avec un palier en élastomère permet ainsi avantageusement d'éviter l'utilisation de dispositifs encombrants pour cette liaison pivot.

Chaque pédale peut également être mobile en rotation autour d'un troisième axe A3, le troisième axe A3 étant sensiblement perpendiculaire au premier axe A1 et au plan de symétrie PS, afin d'améliorer le confort du pilote de l'aéronef. L'angle entre le tibia et le pied du pilote peut ainsi être ajusté à la position optimale pour chaque pilote.

Par ailleurs, le palonnier selon l'invention peut comporter une bielle et une manivelle afin de transformer le mouvement de rotation de l'arbre en mouvement de translation de cette bielle. Dans ce but, la manivelle est solidaire de l'arbre et la bielle est liée à la manivelle par une liaison pivot ou bien une liaison rotule. La bielle est reliée à une chaîne de commande mécanique afin de commander la variation du pas des pales du rotor anticouple d'un aéronef à voilure tournante ou bien le déplacement d'une gouverne de direction d'un avion, dans le cas de commandes de vol mécaniques.

Le palonnier peut également comporter au moins un palier afin de guider en rotation l'arbre par rapport à la structure du palonnier. Un palier peut éventuellement être positionné entre l'arbre de le plancher de l'aéronef. Un palier est par exemple du type roulement à billes.

Un tel palier peut également comporter un ou plusieurs capteurs de position permettant de définir précisément la position angulaire de l'arbre autour du premier axe A1. Dans le cas de commandes de vol électriques, un tel palier muni de capteurs peut remplacer le système bielle-manivelle du palonnier afin d'assurer le pilotage des mouvements en lacet de l'aéronef par l'intermédiaire d'une chaîne de commande électrique.

Il est à noter que la structure du palonnier selon l'invention peut être dissociée du palonnier et formée par le plancher ou bien une partie du plancher de l'aéronef. Le palonnier est alors lié directement au plancher par exemple par l'intermédiaire d'un ou deux paliers positionnés dans l'épaisseur de ce plancher.

En outre, le dispositif de coulissement du palonnier selon l'invention est irréversible. Il peut comporter un moyen de verrouillage actionné une fois le réglage de la position des pédales effectué. De préférence, le dispositif de coulissement permet cette irréversibilité uniquement par son fonctionnement.

Par exemple, le dispositif de coulissement comporte au moins une vis mère liée au corps de palonnier et au moins un écrou lié à la barre de palonnier. Chaque écrou est lié à une vis mère par une liaison hélicoïdale. De fait, une rotation relative d'au moins un écrou par rapport à cette vis mère entraine une translation de cet écrou le long de la vis mère et, par suite, le coulissement de la barre de palonnier par rapport au corps de palonnier.

Selon un premier mode de réalisation de l'invention, le dispositif de coulissement comporte une commande manuelle entrainant chaque écrou en rotation et permettant à la barre de palonnier de coulisser vis-à-vis du corps de palonnier. Chaque écrou a alors une liaison pivot avec la barre de palonnier alors que chaque vis mère est solidaire du corps de palonnier. Aucun mouvement de chaque vis mère par rapport au corps de palonnier n'est donc possible.

Cette commande manuelle comporte par exemple une molette de réglage et une roue dentée solidaires entre elles et liées à la barre de palonnier par des liaisons pivot ainsi qu'un pignon lié à la barre de palonnier par une liaison pivot. L'écrou est solidaire du pignon et la roue dentée engrène avec le pignon, ce qui entraîne alors la rotation de l'écrou.

L'irréversibilité du dispositif de coulissement peut alors être obtenue par la denture de la roue dentée et du pignon ainsi que par le pas de la vis mère. Par exemple, le pas du filetage liant l'écrou et la vis mère est trapézoïdal et son pas est faible, de l'ordre de 2 millimètres (mm). De plus, la roue dentée et le pignon ont une denture hélicoïdale avec un angle d'hélice élevé de l'ordre de 45°.

Selon un deuxième mode de réalisation de l'invention, le dispositif de coulissement comporte une commande électrique entraînant chaque vis mère en rotation et permettant à la barre de palonnier de coulisser vis-à-vis du corps de palonnier par l'intermédiaire de l'écrou. Dans ce cas, chaque écrou est solidaire de la barre de palonnier alors que chaque vis mère est entraînée en rotation par un moteur électrique et liée au corps de palonnier par une liaison pivot. L'irréversibilité est alors obtenue principalement par le pas du filetage de la vis mère.

Dans une variante de ce deuxième mode de réalisation, un moteur électrique entraîne en rotation un écrou, comme la commande manuelle du premier mode de réalisation, par l'intermédiaire d'une roue dentée et d'un pignon afin de limiter les efforts à fournir par le moteur électrique. L'irréversibilité est alors obtenue par le choix de la denture de la roue dentée et du pignon et par le pas du filetage de la vis mère.

Selon un troisième mode de réalisation de l'invention, le palonnier peut également comporter une servocommande associée à chaque pédale, chaque pédale étant mobile en rotation autour du troisième axe A3. Chaque servocommande est positionnée à proximité d'une pédale et liée à la barre de palonnier afin qu'une action d'un pied du pilote sur une pédale autour de ce troisième axe A3 agisse sur la servocommande. Chaque servocommande est reliée à un système de freinage d'au moins une roue d'un train d'atterrissage de l'aéronef.

Le palonnier permet ainsi de commander le freinage de l'aéronef au sol par l'intermédiaire des roues de son train d'atterrissage. De plus, chaque pédale commandant une servocommande de façon indépendante, le palonnier permet également de diriger l'aéronef au sol par des appuis différentiels sur les pédales commandant des freinages différents sur les roues de ce train d'atterrissage.

Pour ce troisième mode de réalisation, la commande du dispositif de coulissement peut être manuelle ou bien électrique.

De plus, le dispositif de coulissement comporte au moins une barre de guidage sensiblement parallèle à la vis mère et liée au corps de palonnier. Chaque barre de guidage permet d'une part de reprendre la majorité des efforts générés par les actions des pieds du pilote et d'autre part d'assurer le guidage en coulissement de la barre de palonnier par rapport au corps de palonnier. Chaque vis mère reprend la partie complémentaire de ces efforts et assure également une partie du guidage.

Le parallélisme de chaque barre de guidage et de chaque vis mère doit être très précis pour éviter des frottements élevés qui peuvent ensuite induire des efforts de friction dans la chaîne de commandes de vol. A cet effet, la barre de guidage est montée souple afin de compenser des écarts dans ce parallélisme.

Le dispositif de coulissement peut également comporter un palier antifriction assurant une liaison pivot glissant entre la barre de guidage et le corps de palonnier afin de réduire les efforts de coulissement de la barre de guidage et, par suite, les efforts de friction dans la chaîne de commandes de vol.

De préférence, le dispositif de coulissement du palonnier selon l'invention comporte une seule vis mère et une seule barre de guidage.

Selon une variante du premier mode de réalisation du palonnier selon l'invention, l'écrou peut être solidaire du corps de palonnier et fixe vis-à-vis de ce corps de palonnier aussi bien en rotation qu'en translation. La vis mère et la barre de guidage sont alors liées à la barre de palonnier. La barre de guidage est solidaire de la barre de palonnier alors que la vis mère est liée par une liaison pivot à la barre de palonnier. La molette de réglage entraine alors, par l'intermédiaire de la roue dentée, la vis mère en rotation et, par suite, la translation de la barre de palonnier vis-à-vis de l'écrou et du corps de palonnier.

De même, une variante du deuxième mode de réalisation peut comporter un écrou solidaire du corps de palonnier, la vis mère et la barre de guidage étant liées à la barre de palonnier.

Par ailleurs, le dispositif de coulissement peut comporter au moins un moyen de rattrapage de jeu au niveau de la vis mère afin de limiter les jeux dans sa liaison avec l'écrou de la barre de palonnier et, par suite, d'assurer la précision et la réactivité de la commande des mouvements en lacet de l'aéronef par le palonnier.

L'invention a également pour objet un aéronef comportant un siège destiné à un pilote de l'aéronef et un palonnier tel que précédemment décrit. Le palonnier est agencé devant le siège et est configuré pour se déplacer longitudinalement par rapport au siège.

L'invention et ses avantages apparaîtront avec plus de détails dans le cadre de la description qui suit avec des exemples de réalisation donnés à titre illustratif en référence aux figures annexées qui représentent :
- les figures 1 et 2, un premier mode de réalisation d'un palonnier selon l'invention,
- la figure 3, un deuxième mode de réalisation d'un palonnier selon l'invention,
- la figure 4, une vue de la cinématique de réglage d'un siège d'aéronef,
- la figure 5, une vue du dispositif de coulissement du palonnier,
- la figure 6, une vue du moyen de rattrapage de jeu du dispositif de coulissement,
- la figure 7, une vue de détail de la liaison pivot avec un palier en élastomère d'une pédale, et
- la figure 8, un troisième mode de réalisation d'un palonnier selon l'invention.

Les éléments présents dans plusieurs figures distinctes sont affectés d'une seule et même référence.

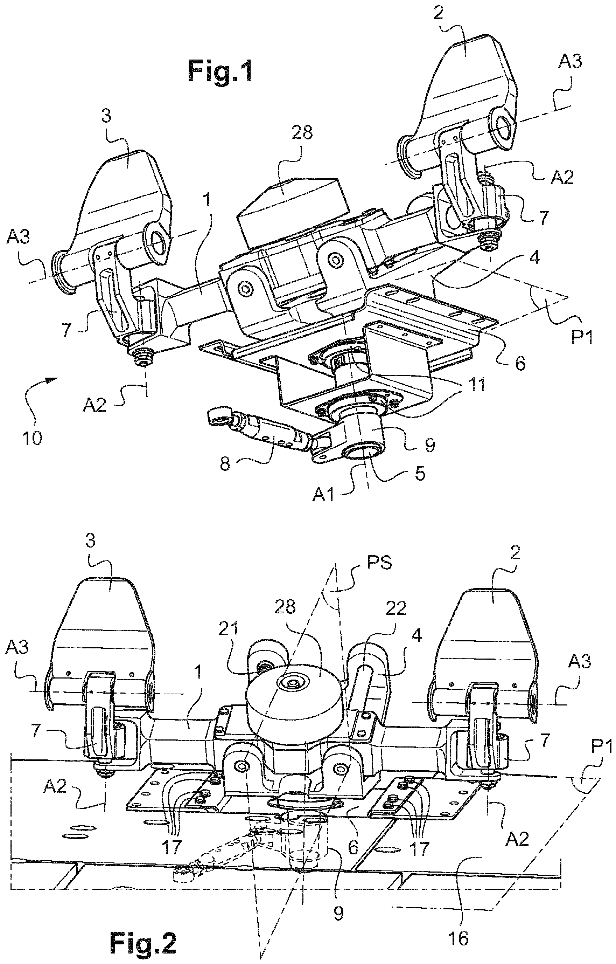

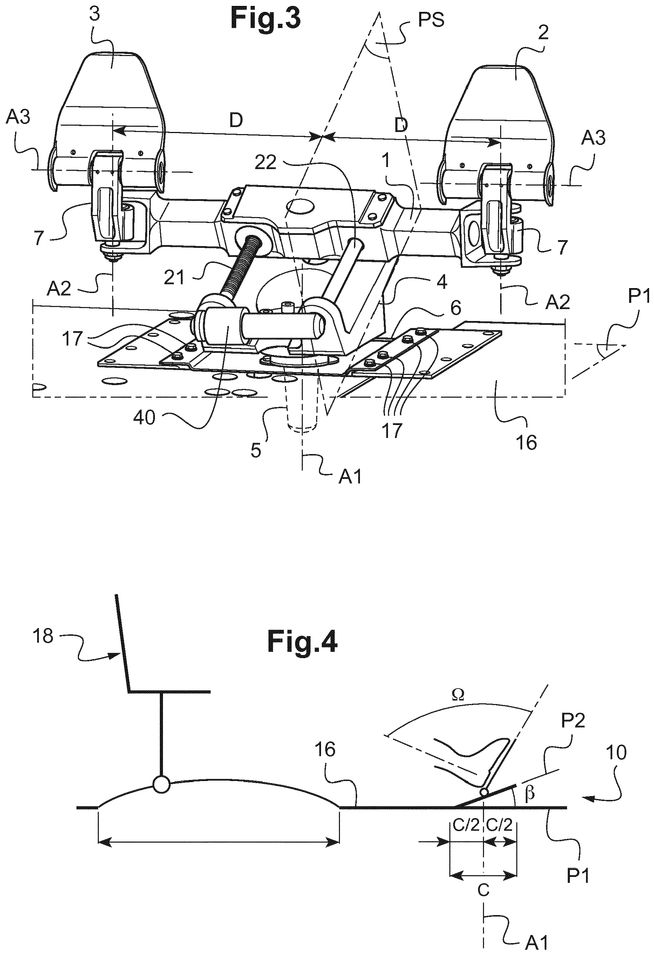

Les figures 1 et 2 représentent un premier mode de réalisation d'un palonnier 10 destiné à un aéronef et en particulier à un aéronef à voilure tournante. Ce palonnier 10 permet de piloter les mouvements en lacet de cet aéronef en commandant des variations de pas collectif des pales d'un rotor anticouple de l'aéronef. Cette commande de variation de pas est effectuée par l'intermédiaire d'une chaîne de commande mécanique reliée à une bielle 8 du palonnier 10. Un deuxième mode de réalisation d'un palonnier 10 est représenté sur la figure 3.

Le palonnier 10 comporte une barre de palonnier 1, un corps de palonnier 4, deux pédales 2,3 un dispositif de coulissement 20, un arbre 5, deux roulements à billes 11, une structure 6, une bielle 8 et une manivelle 9.

Chaque pédale 2,3 est liée à une extrémité de la barre de palonnier 1 par l'intermédiaire d'un support de liaison 7. Chaque pédale 2,3 est positionnée à une même distance D d'un plan de symétrie PS attaché au corps de palonnier 4.

L'arbre 5 est solidaire du corps de palonnier 4 et muni d'un premier axe A1 qui est situé sur le plan de symétrie PS.

La structure 6 est fixée à un plancher 16 de l'aéronef par l'intermédiaire des vis 17. Ce plancher 16 est plat et constitue un premier plan P1. Les deux roulements à billes 11 assurent le guidage en rotation de l'arbre 5 par rapport à la structure 6. Ainsi, l'ensemble formé par le corps de palonnier 4 et l'arbre 5 est mobile en rotation par rapport à la structure 6 autour du premier axe A1. Le premier axe A1 est perpendiculaire au plancher 16 de l'aéronef et est sensiblement parallèle à une direction verticale de l'aéronef.

Le dispositif de coulissement 20 permet à la barre de palonnier 1 de coulisser par rapport au corps de palonnier 4 afin de régler la position des pédales 2,3 par rapport au siège 18 du pilote de l'aéronef. De la sorte, la barre de palonnier 1 et les pédales 2,3 peuvent coulisser par rapport au corps de palonnier 4. De plus, la barre de palonnier 1 et les pédales 2,3 accompagnent le corps de palonnier 4 lors de sa rotation autour du premier axe A1.

Le dispositif de coulissement 20 est irréversible, de sorte qu'une fois la position des pédales 2,3 réglée, aucun mouvement n'est possible entre la barre de palonnier 1 et le corps de palonnier 4 sous l'action des pieds du pilote sur les pédales 2,3.

Ainsi, une action des pieds du pilote de l'aéronef sur les pédales 2,3 entraîne une rotation de ces pédales 2,3 autour du premier axe A1 et, par suite, une rotation du corps de palonnier 4 autour de ce premier axe A1.

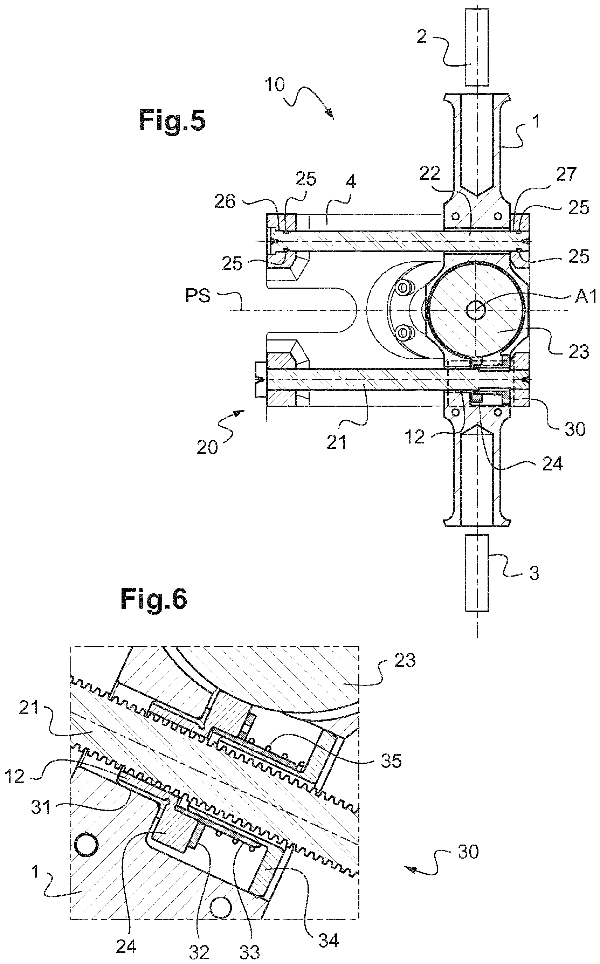

Le dispositif de coulissement 20 selon le premier mode de réalisation du palonnier 10 est représenté en détail sur la figure 5. Ce dispositif de coulissement 20 comporte une vis mère 21, une barre de guidage 22 sensiblement parallèle à la vis mère 21, une roue dentée 23, un pignon 24 et un écrou 12.

La vis mère 21 est solidaire avec le corps de palonnier 4 et donc fixe vis-à-vis de ce corps de palonnier 4. La barre de guidage 22 est liée au corps de palonnier 4 par une liaison pivot formée plus précisément par une liaison pivot 26 à une extrémité de la barre de guidage 22 et une liaison pivot glissant 27 à l'autre extrémité de la barre de guidage 22. La barre de guidage 22 est liée à la barre de palonnier 1 par une liaison pivot glissant 29.

La roue dentée 23 et le pignon 24 sont liés à la barre de palonnier 1 respectivement par une liaison pivot. La roue dentée 23 est constituée par un engrenage à denture hélicoïdale et engrène avec le pignon 24. L'écrou 12 est solidaire du pignon 24 et donc entraîné en rotation avec ce pignon 24. L'écrou 12 est lié à la barre de palonnier 1 par une liaison pivot et est lié à la vis mère 21 par une liaison hélicoïdale formée par le pas du filetage de la vis mère 21 et cet écrou 12.

Le pas du filetage de la vis mère 21 est trapézoïdal et son pas de l'ordre de 2mm, ce qui contribue à l'irréversibilité du coulissement de la barre de palonnier 1, de même que la denture hélicoïdale de la roue dentée 23 et du pignon 24.

Le dispositif de coulissement 20 comporte également une molette de réglage 28 visible sur les figures 1 et 2 et solidaire de la roue dentée 23. Ainsi, une rotation de la molette de réglage 28 s'accompagne d'une rotation de la roue dentée 23 qui entraîne une rotation du pignon 24 et de l'écrou 12.

Par la suite, la rotation de l'écrou 12 par rapport au corps de palonnier 4 entraine une translation de l'écrou 12 par rapport à la vis mère 21 et ainsi le coulissement de la barre de palonnier 1 par rapport au corps de palonnier 4.

La barre de guidage 22 et la vis mère 21 doivent être parallèles pour permettre un coulissement de la barre de palonnier 1 en limitant les efforts résistants. Afin de compenser des écarts dans ce parallélisme, des joints toriques 25 sont positionnés entre la barre de guidage 22 et le corps de palonnier 4, permettant un faible débattement angulaire de la barre de guidage 22 lors de la déformation de ces joints toriques 25.

Par ailleurs, le dispositif de coulissement 20 comporte un moyen de rattrapage de jeu 30 au niveau de la liaison entre la vis mère 21 et le barre de palonnier 1. Ce moyen de rattrapage de jeu 30, représenté sur la figure 6, permet, en supprimant les jeux dans cette liaison, d'assurer la précision et la réactivité de la commande des mouvements en lacet de l'aéronef par le palonnier 10.

Le moyen de rattrapage de jeu 30 comporte un palier épaulé 31 et une butée 32 en matériau antifriction ainsi qu'une bague 33, un bouchon 34 et un ressort 35. L'écrou 12 est guidé en rotation dans la barre de palonnier 1 via d'une part le palier épaulé 31 et d'autre part la bague 33 et le bouchon 34. Le ressort 35 maintient l'écrou 12 en appui sur le palier épaulé 31. La butée 32 est positionnée entre l'écrou 12 tournant et le ressort 35 qui est fixe par rapport à la barre de palonnier 1. La bague 33 et le un bouchon 34 sont également fixes par rapport à la barre de palonnier 1.

Ainsi, suivant un premier sens de rotation, le ressort 35, la roue dentée 23 et la vis mère 21 exercent sur l'écrou 12 des efforts dans le même sens. Suivant un second sens de rotation opposé, la vis mère 21 et la roue dentée 23 exercent des efforts opposés à celui du ressort 35. De la sorte, lors des phases de réglages, il y a toujours des efforts appliqués d'une part dans la liaison filetée entre l'écrou 12 et la vis mère 21 et d'autre part dans la liaison d'engrènement entre la roue dentée 23 et le pignon 24. De plus, en dehors des phases de réglage, les jeux dans la liaison filetée et dans la liaison d'engrènement sont également rattrapés dans le même sens que les efforts appliqués par le pilote sur le palonnier 10 au niveau des pédales 2,3.

La manivelle 9 est solidaire de l'arbre 5 et la bielle 8 est liée à la manivelle 9 par une liaison rotule. Ainsi, la bielle 8 et la manivelle 9 permettent de transformer le mouvement de rotation de l'arbre 5 en un mouvement de translation de la bielle 8. Ainsi, une action des pieds du pilote de l'aéronef sur les pédales 2,3 entraîne une rotation de ces pédales 2,3 et de l'arbre 5 autour du premier axe A1 et, par suite, une translation de la bielle 8. La bielle 8 est reliée à une chaîne de commande mécanique afin de commander la variation du pas collectif des pales du rotor anticouple de l'aéronef. Ce premier mode de réalisation du palonnier 10 est destiné à des commandes de vol mécaniques de l'aéronef.

Sur les figures 1, 2 et 8, le palonnier 10 est représenté en position arrière de réglage de la barre de palonnier 1 et sur la figure 3 en position avant de réglage de cette barre de palonnier 1. La position arrière est la position pour laquelle les pédales 2,3 sont les plus proches du siège 18 alors que la position avant est la position pour laquelle les pédales 2,3 sont les plus éloignées du siège 18.

La figure 4 représente une vue simplifiée du siège 18 du pilote de l'aéronef et du palonnier 10. On constate sur les figures 1 à 4 que le premier axe A1 est situé à mi-distance de la position arrière et de la position avant de la barre de palonnier 1. En effet, pour une course totale C de coulissement de la barre de palonnier 1, le premier axe A1 est situé à une distance égale à la moitié de la course totale C (C/2) de la position arrière et de la position avant.

Ainsi, le palonnier 10 s'adapte à la longueur et à la mobilité des jambes du pilote ainsi qu'à la position du siège 18. En effet, l'arc de cercle décrit par chaque pédale 2,3 autour du premier axe A1 lorsque la barre de palonnier 1 est proche de la position arrière est de rayon plus faible que lorsque la barre de palonnier 1 est proche de la position avant.

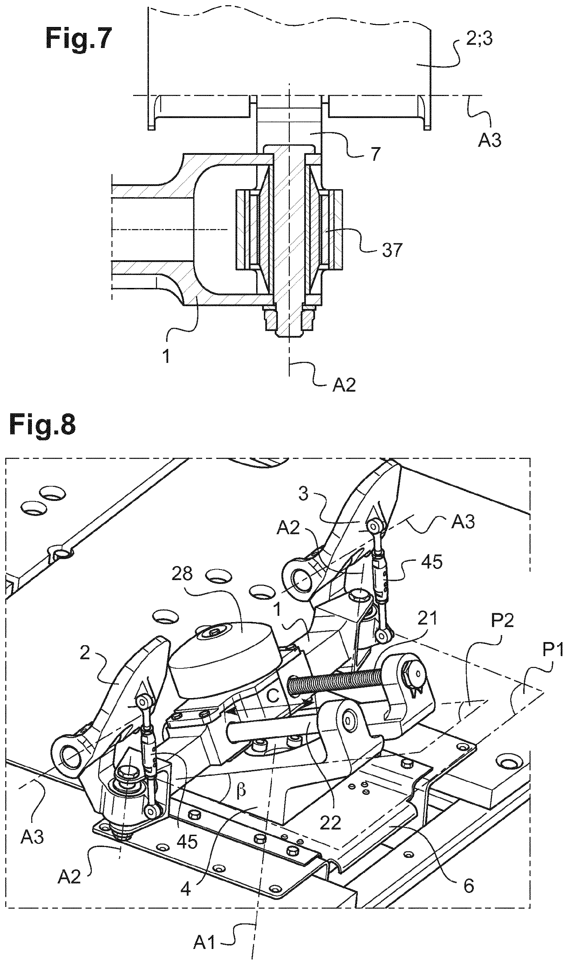

En outre, le coulissement de la barre de palonnier 1 par rapport au corps de palonnier 4 se fait dans un second plan P2 incliné et formant un angle β avec le premier plan P1 tel que représenté sur les figures 4 et 8. Selon ce second plan P2, les pédales 2,3 s'éloignent verticalement du plancher 16 de l'aéronef 50 lorsque la barre de palonnier 1 coulisse vers l'avant de l'aéronef, c'est-à-dire la position avant de réglage.

Cette direction inclinée selon l'angle β permet à chaque pied du pilote de conserver un angle Ω entre le tibia de la jambe du pilote et l'axe longitudinal de la pédale sensiblement constant, quelle que soit la position du siège du pilote et la morphologie du pilote. Cette direction inclinée de coulissement de la barre de palonnier 1 est particulièrement adaptée au siège dont le réglage de la position se fait simultanément de façons longitudinale et verticale comme indiqué sur la figure 4.

Le support de liaison 7 est relié à la barre de palonnier 1 par une liaison pivot avec un palier en élastomère 37 selon un deuxième axe A2 sensiblement parallèle au premier axe A1. Une telle liaison pivot avec un palier en élastomère 37 est représentée sur la figure 7. Chaque pédale 2,3 et le support 7 sont mobiles en rotation autour du deuxième axe A2, avec un débattement limité par le palier en élastomère 37. Ce débattement limité est suffisant pour que chaque pédale 2,3 s'adapte automatiquement à la position angulaire de la barre de palonnier 1 autour du premier axe A1. De plus, la raideur en torsion de ce palier en élastomère 37 impose un faible effort résistant permettant de recentrer la pédale 2,3 sur la barre de palonnier 1 dès que le pilote retire son pied de la pédale 2,3.

Chaque pédale 2,3 est également mobile en rotation autour d'un troisième axe A3 par rapport au support de liaison 7. Ce troisième axe A3 est sensiblement perpendiculaire au premier axe A1 et au plan de symétrie PS, lorsqu'aucune action n'est exercée sur les pédales 2,3 par un pilote. Cette mobilité en rotation autour du troisième axe A3 permet d'ajuster l'inclinaison de chaque pédale 2,3 afin d'améliorer le confort du pilote.

Selon le deuxième mode de réalisation du palonnier 10 représenté sur la figure 3, le dispositif de coulissement 20 comporte un moteur électrique 40 entraînant la vis mère 21 en rotation éventuellement par un moyen de réduction de la vitesse de rotation intégré au moteur électrique 40. Dans ce deuxième mode de réalisation, l'écrou 12 est solidaire de la barre de palonnier 1 et la vis mère 21 est liée au corps de palonnier 4 par une liaison pivot.

Selon ce deuxième mode de réalisation, le palonnier 10 ne comporte pas de bielle 8 et de manivelle 9. Les roulements à billes 11 comportent des capteurs de position définissant précisément la position angulaire de l'arbre 5 autour du premier axe A1. Ce palonnier 10 selon ce second mode de réalisation est destiné à des commandes de vol électriques de l'aéronef. La position angulaire de l'arbre 5 définie par ces capteurs permet alors de piloter les mouvements en lacet de l'aéronef par l'intermédiaire d'une chaîne de commande électrique.

Un troisième mode de réalisation du palonnier 10 est représenté sur la figure 8. Le palonnier 10 comporte deux servocommandes 45. Chaque servocommande 45 est liée à une pédale 2,3, chaque pédale 2,3 étant mobile en rotation autour du troisième axe A3. Chaque servocommande 45 est également liée à un support de liaison 7 par une liaison pivot. Chaque servocommande 45 est reliée à un système de freinage d'au moins une roue d'un train d'atterrissage de l'aéronef. De fait, une action d'un pied du pilote sur une pédale 2,3 autour du troisième axe A3 agit sur une servocommande 45 afin de commander le freinage de l'aéronef au sol par l'intermédiaire des roues de son train d'atterrissage.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention qui est uniquement définie par le texte des revendications.

## Revendications

1. Palonnier (10) réglable et rotatif pour aéronef comportant :
- une barre de palonnier (1),
- un corps de palonnier (4),
- deux pédales (2,3) liées à ladite barre de palonnier (1) de part et d'autre dudit corps de palonnier (4), lesdites deux pédales (2,3) étant positionnées à une même distance D d'un plan de symétrie (PS) attaché audit corps de palonnier (4),
- un dispositif de coulissement (20) permettant à la dite barre de palonnier (1) de coulisser vis-à-vis du corps de palonnier (4),
- une structure (6), apte à être fixée à un plancher (16) dudit aéronef et possédant un premier plan (P1) défini comme étant un plan de fixation de ladite structure (6) sur ledit plancher (16) dudit aéronef, sensiblement perpendiculaire audit plan de symétrie (PS) et apte à être sensiblement parallèle audit plancher (16), et
- un arbre (5) muni d'un premier axe (A1) se trouvant sur ledit plan de symétrie (PS), ledit arbre (5) étant solidaire dudit corps de palonnier (4) qui est mobile en rotation vis-à-vis de ladite structure (6) autour dudit premier axe (A1),
**caractérisé en ce que** ledit dispositif de coulissement (20) est incliné vis-à-vis de ladite structure (6) afin que ladite barre de palonnier (1) coulisse vis-à-vis dudit corps de palonnier (4) selon un second plan (P2) formant un angle β avec ledit premier plan (P1) de telle sorte que la position verticale desdites pédales (2,3) vis-à-vis dudit premier plan (P1) est apte à être modifiée lors du coulissement desdites pédales (2,3), lesdites pédales (2,3) étant apte à s'éloigner verticalement dudit premier plan (P1) lorsque ladite barre de palonnier (1) coulisse vers l'avant dudit palonnier (10) en s'éloignant d'un siège (18) d'un pilote dudit aéronef.

2. Palonnier (10) selon la revendication 1,
**caractérisé en ce que** ledit dispositif de coulissement (20) comporte au moins une vis mère (21) liée audit corps de palonnier (4), au moins une barre de guidage (22) sensiblement parallèle à chaque vis mère (21) et au moins un écrou (12) lié à ladite barre de palonnier (1), chaque barre de guidage (22) ayant une liaison pivot glissant avec ladite barre de palonnier (1) et une liaison pivot avec ledit corps de palonnier (4), chaque écrou (12) étant lié à une vis mère (21) par une liaison hélicoïdale.

3. Palonnier (10) selon la revendication 2,
**caractérisé en ce que** ledit dispositif de coulissement (20) comporte une commande manuelle, une molette de réglage (28) entraînant ledit écrou (12) en rotation par rapport à une vis mère (21) et permettant à la dite barre de palonnier (1) de coulisser vis-à-vis du corps de palonnier (4), chaque vis mère (21) étant solidaire dudit corps de palonnier (4) et chaque écrou (12) étant lié à ladite barre de palonnier (1) par une liaison pivot.

4. Palonnier (10) selon la revendication 2,
**caractérisé en ce que** ledit dispositif de coulissement (20) comporte une commande électrique, un moteur électrique (40) entraînant ladite vis mère (21) en rotation et permettant à la dite barre de palonnier (1) de coulisser vis-à-vis du corps de palonnier (4), chaque vis mère (21) étant liée audit corps de palonnier (4) par une liaison pivot et chaque écrou (12) étant solidaire de ladite barre de palonnier (1).

5. Palonnier (10) selon l'une quelconque des revendications 2 à 4,
**caractérisé en ce que** ledit dispositif de coulissement (20) comporte au moins un moyen de rattrapage de jeu (30) au niveau d'une vis mère (21).

6. Palonnier (10) selon la revendication 5,
**caractérisé en ce que** ledit moyen de rattrapage de jeu (30) comporte un palier épaulé (31) et une butée (32) en matériau antifriction ainsi qu'une bague (33), un bouchon (34) et un ressort (35), ledit écrou (12) est guidé en rotation dans ladite barre de palonnier (1) par l'intermédiaire d'une part dudit palier épaulé (31) et d'autre part de ladite bague (33) et dudit bouchon (34), ledit ressort (35) maintenant ledit écrou (12) en appui sur ledit palier épaulé (31) et ladite butée (32) étant positionnée entre ledit écrou (12) et ledit ressort (35).

7. Palonnier (10) selon l'une quelconque des revendications 1 à 6,
**caractérisé en ce que** chaque pédale (2,3) est mobile en rotation autour d'un deuxième axe (A2) sensiblement parallèle audit premier axe (A1).

8. Palonnier (10) selon la revendication 7,
**caractérisé en ce que** ledit palonnier (10) comporte une liaison pivot avec un palier en élastomère (37) selon ledit deuxième axe (A2) entre ladite barre de palonnier (1) et chaque pédale (2,3) afin que la position de chaque pédale (2,3) soit apte à être adaptée autour dudit deuxième axe (A2) à la position d'un pied d'un pilote dudit aéronef quelle que soit la position angulaire dudit corps de palonnier (4) autour dudit premier axe (A1).

9. Palonnier (10) selon l'une quelconque des revendications 7 à 8,
**caractérisé en ce que** ledit palonnier (10) comporte un système d'asservissement reliant lesdites pédales (2,3) entre elles et avec ladite barre de palonnier (1) afin que la position de chaque pédale (2,3) soit apte à être adaptée autour dudit deuxième axe (A2) à la position d'un pied d'un pilote dudit aéronef quelle que soit la position angulaire dudit corps de palonnier (4) autour dudit premier axe (A1), lesdites pédales étant alors parallèles entre elles.

10. Palonnier (10) selon l'une quelconque des revendications 1 à 9,
**caractérisé en ce que** chaque pédale (2,3) est mobile en rotation autour d'un troisième axe (A3), ledit troisième axe (A3) étant sensiblement perpendiculaire audit premier axe (A1) et audit plan de symétrie (PS), afin d'améliorer le confort d'un pilote dudit aéronef.

11. Palonnier (10) selon l'une quelconque des revendications 1 à 9,
**caractérisé en ce que** chaque pédale (2,3) est mobile en rotation autour d'un troisième axe (A3), ledit troisième axe (A3) étant sensiblement perpendiculaire audit premier axe (A1) et audit plan de symétrie (PS), et ledit palonnier (10) comportant une servocommande (9) pour chaque pédale (2,3), chaque servocommande (9) étant positionnée à proximité d'une pédale (2,3) et liée à ladite barre de palonnier (1) afin qu'une action d'un pied d'un pilote sur une pédale (2,3) autour dudit troisième axe (A3) agisse sur ladite servocommande (9), chaque servocommande (9) étant apte à être reliée à un système de freinage d'au moins une roue d'un train d'atterrissage dudit aéronef.

12. Palonnier (10) selon l'une quelconque des revendications 1 à 11,
**caractérisé en ce que** ledit palonnier (10) comporte au moins un roulements à billes (11) assurant le guidage en rotation entre ledit arbre (5) et ladite structure (6), au moins un roulement à billes (11) comportant des capteurs de position permettant de définir la position angulaire dudit arbre (5).

13. Aéronef,
**caractérisé en ce que** ledit aéronef comporte un siège (18) destiné à un pilote dudit aéronef et un palonnier (10) selon l'une quelconque des revendications 1 à 12.

## Patentansprüche

1. Einstellbares und drehbares Ruderpedal (10) für ein Flugzeug, mit
- einer Ruderpedalstange (1),
- einem Ruderpedalblock (4),
- zwei Pedalen (2, 3), die mit der Ruderpedalstange (1) auf beiden Seiten des Ruderpedalblocks (4) verbunden sind, wobei die beiden Pedale (2, 3) im gleichen Abstand D von einer an dem Ruderpedalblock (4) festen Symmetrieebene (PS) positioniert sind,
- einer Gleitvorrichtung (20), die es der Ruderpedalstange (1) ermöglicht, in Bezug auf den Ruderpedalblock (4) zu gleiten,
- einer Struktur (6), die eingerichtet ist, um an einem Boden (16) des Flugzeugs befestigt zu werden und die eine erste Ebene (P1) aufweist, die als Ebene zum Befestigen der Struktur (6) an dem Boden (16) des Flugzeugs definiert ist, im Wesentlichen senkrecht zur Symmetrieebene (PS) ist und eingerichtet ist, um parallel zum Boden (16) zu sein, sowie
- einer Welle (5) mit einer auf der Symmetrieebene (PS) liegenden ersten Achse (A1), wobei die Welle (5) mit dem Ruderpedalblock (4) fest verbunden ist, der in Bezug auf die Struktur (6) um die erste Achse (A1) drehbar beweglich ist,
**dadurch gekennzeichnet, dass** die Gleitvorrichtung (20) in Bezug auf die Struktur (6) geneigt ist, so dass die Ruderpedalstange (1) in Bezug auf den Ruderpedalblock (4) in einer zweiten Ebene (P2) gleitet, die einen Winkel β mit der ersten Ebene (P1) bildet, so dass die vertikale Position der Pedale (2, 3) in Bezug auf die erste Ebene (P1) eingerichtet ist, um modifiziert zu werden, wenn die Pedale (2, 3) gleiten, wobei die Pedale (2, 3) eingerichtet sind, um sich vertikal von der ersten Ebene (P1) weg zu bewegen, wenn die Ruderpedalstange (1) zu einer Vorderseite des Ruderpedals gleitet und sich dabei von einem Sitz (18) eines Piloten des Flugzeugs entfernt.

2. Ruderpedal (10) nach Anspruch 1,
**dadurch gekennzeichnet, dass** die Gleitvorrichtung (20) mindestens eine mit dem Ruderpedalblock (4) verbundene Leitspindel (21), mindestens eine zu jeder Leitspindel (21) im Wesentlichen parallele Führungsstange (22) und mindestens eine mit der Ruderpedalstange (1) verbundene Mutter (12) umfasst, jede Führungsstange (22) eine gleitende Schwenkverbindung mit der Ruderpedalstange (1) und eine Schwenkverbindung mit dem Ruderpedalblock (4) aufweist, wobei jede Mutter (12) mit einer Leitspindel (21) durch eine schraubenlinienförmige Verbindung verbunden ist.

3. Ruderpedal (10) nach Anspruch 2,
**dadurch gekennzeichnet, dass** die Gleitvorrichtung (20) eine manuelle Steuerung, ein Einstellrad (28), das die Mutter (12) in Bezug auf eine Leitspindel (21) drehantreibt und die Ruderpedalstange (1) in Bezug auf den Ruderpedalblock (4) gleiten lässt, umfasst, wobei jede Leitspindel (21) mit dem Ruderpedalblock (4) fest verbunden ist und jede Mutter (12) mit der Ruderpedalstange (1) durch eine Schwenkverbindung verbunden ist.

4. Ruderpedal (10) nach Anspruch 2,
**dadurch gekennzeichnet, dass** die Gleitvorrichtung (20) einen elektrische Steuerung, einen Elektromotor (40), der die Leitspindel (21) drehantreibt und die Ruderpedalstange (1) in Bezug auf den Ruderpedalblock (4) gleiten lässt, umfasst, wobei jede Leitspindel (21) mit dem Ruderpedalblock (4) durch eine Schwenkverbindung verbunden ist und jede Mutter (12) mit der Ruderpedalstange (1) fest verbunden ist.

5. Ruderpedal (10) nach einem der Ansprüche 2 bis 4,
**dadurch gekennzeichnet, dass** die Gleitvorrichtung (20) mindestens ein Spielausgleichsmittel (30) an einer Leitspindel (21) umfasst.

6. Ruderpedal (10) nach Anspruch 5,
**dadurch gekennzeichnet, dass** das Spielausgleichsmittel (30) ein Schulterlager (31) und einen Anschlag (32) aus reibungsarmem Material sowie einen Ring (33), einen Stopfen (34) und eine Feder (35) umfasst, dass die Mutter (12) an der Ruderpedalstange (1) durch das Schulterlager (31) einerseits und den Ring (33) und den Stopfen (34) andererseits drehbar geführt ist, wobei die Feder (35) die Mutter (12) gegen das Schulterlager (31) gedrückt hält und der Anschlag (32) zwischen der Mutter (12) und der Feder (35) positioniert ist.

7. Ruderpedal (10) nach einem der Ansprüche 1 bis 6,
**dadurch gekennzeichnet, dass** jedes Pedal (2, 3) um eine zu der ersten Achse (A1) im Wesentlichen parallele zweite Achse (A2) drehbeweglich ist.

8. Ruderpedal (10) nach Anspruch 7,
**dadurch gekennzeichnet, dass** das Ruderpedal (10) eine Schwenkverbindung mit einem Elastomerlager (37) entlang der zweiten Achse (A2) zwischen der Ruderpedalstange (1) und jedem Pedal (2, 3) aufweist, so dass die Position jedes Pedals (2, 3) um die zweite Achse (A2) herum unabhängig von der Winkelposition des Ruderpedalblocks (4) um die erste Achse (A1) an die Position eines Fußes eines Piloten des Flugzeugs anpassbar ist.

9. Ruderpedal (10) nach einem der Ansprüche 7 bis 8,
**dadurch gekennzeichnet, dass** das Ruderpedal (10) ein Servosystem beinhaltet, das die Pedale (2, 3) miteinander und mit der Ruderpedalstange (1) verbindet, so dass die Position jedes Pedals (2, 3) um die zweite Achse (A2) herum unabhängig von der Winkellage des Ruderpedalblocks (4) um die erste Achse (A1) an die Position eines Fußes eines Piloten des Flugzeugs anpassbar ist, wobei dann die Pedale untereinander parallel sind.

10. Ruderpedal (10) nach einem der Ansprüche 1 bis 9,
**dadurch gekennzeichnet, dass** jedes Pedal (2, 3) um eine dritte Achse (A3) drehbeweglich ist, wobei die dritte Achse (A3) im Wesentlichen senkrecht zu der ersten Achse (A1) und der Symmetrieebene (PS) steht, um den Komfort eines Piloten des Flugzeugs zu verbessern.

11. Ruderpedal (10) nach einem der Ansprüche 1 bis 9,
**dadurch gekennzeichnet, dass** jedes Pedal (2, 3) um eine dritte Achse (A3) drehbar ist, wobei die dritte Achse (A3) im Wesentlichen senkrecht zu der ersten Achse (A1) und der Symmetrieebene (PS) steht, und das Ruderpedal (10) eine Servosteuerung (9) für jedes Pedal (2, 3) aufweist, wobei jede Servosteuerung (9) in der Nähe eines Pedals (2, 3) positioniert ist und mit der Ruderpedalstange (1) verbunden ist, so dass eine Wirkung eines Fußes eines Piloten auf ein Pedal (2, 3) um die dritte Achse (A3) auf die Servosteuerung (9) einwirkt, wobei jede Servosteuerung (9) eingerichtet ist, um mit einem Bremssystem von mindestens einem Rad eines Fahrwerks des Flugzeugs verbunden zu sein.

12. Ruderpedal (10) nach einem der Ansprüche 1 bis 11,
**dadurch gekennzeichnet, dass** das Ruderpedal (10) mindestens ein Kugellager (11) zum Führen der Drehung zwischen der Welle (5) und der Struktur (6) umfasst, mindestens ein Kugellager (11) mit Positionssensoren zum Definieren der Winkelposition der Welle (5).

13. Flugzeug,
**dadurch gekennzeichnet, dass** das Flugzeug einen Sitz (18) für einen Piloten des Flugzeugs und ein Ruderpedal (10) nach einem der Ansprüche 1 bis 12 aufweist.

## Claims

1. An adjustable and rotary rudder bar (10) for an aircraft comprising:
- a rudder bar elongate member (1),
- a rudder bar body (4),
- two pedals (2, 3) connected to said rudder bar elongate member (1) on either side of said rudder bar body (4), said two pedals (2, 3) being positioned at a same distance D from a plane of symmetry (PS) attached to said rudder bar body (4).
- a sliding device (20) whereby said rudder bar elongate member (1) may slide relative to the rudder bar body (4),
- a structure (6), capable of being fastened to a floor (16) of said aircraft and having a first plane (P1) defined as being a plane of fastening of said structure (6) on to said floor (16) of said aircraft, substantially perpendicular to said plane of symmetry (PS) and capable of being substantially parallel to said floor (16), and
- a shaft (5) provided with a first axis (A1) being on said plane of symmetry (PS), said shaft (5) being secured to said rudder bar body (4) which is rotatably movable relative to said structure (6) about said first axis (A1), **characterised in that** said sliding device (20) is angled relative to said structure (6) such that said rudder bar elongate member (1) slides relative to said rudder bar body (4) in a second plane (P2) forming an angle β with said first plane (P1) such that the vertical positions of said pedals (2, 3) relative to said first plane (P1) are capable of being modified when said pedals (2, 3) slide, said pedals (2, 3) being capable of moving away vertically from said first plane (P1) when said rudder bar elongate member (1) slides towards the front of said rudder bar (10) while moving away from a seat (18) of a pilot of said aircraft.

2. Rudder bar (10) according to Claim 1, **characterised in that** said sliding device (20) comprises at least one leadscrew (21) connected to said rudder bar body (4), at least one guide bar (22) substantially parallel to each leadscrew (21) and at least one nut (12) connected to said rudder bar elongate member (1), each guide bar (22) having a pivoting link sliding with said rudder bar elongate member (1) and a pivoting link with said rudder bar body (4), each nut (12) being connected to a leadscrew (21) by a helical link.

3. Rudder bar (10) according to Claim 2, **characterised in that** said sliding device (20) comprises a manual control, an adjustment wheel (28) rotating said nut (12) relative to a leadscrew (21) and allowing said rudder bar elongate member (1) to slide relative to the rudder bar body (4), each leadscrew (21) being secured to said rudder bar body (4) and each nut (12) being connected to said rudder bar elongate member (1) by a pivoting link.

4. Rudder bar (10) according to Claim 2, **characterised in that** said sliding device (20) comprises an electric control, an electric motor (40) rotating said leadscrew (21) and allowing said rudder bar elongate member (1) to slide relative to the rudder bar body (4), each leadscrew (21) being connected to said rudder bar body (4) by a pivoting link and each nut (12) being secured to said rudder bar elongate member (1).

5. Rudder bar (10) according to any one of Claims 2 to 4, **characterised in that** said sliding device (20) comprises at least one play compensation means (30) at a leadscrew (21).

6. Rudder bar (10) according to Claim 5, **characterised in that** said play compensation means (30) comprises a stepped bearing (31) and a stop (32) made of antifriction material as well as a ring (33), a plug (34) and a spring (35). Said nut (12) is rotatably guided in said rudder bar elongate member (1) via, on one hand, said stepped bearing (31) and, on the other hand, said ring (33) and said plug (34), said spring (35) retaining said nut (12) against said stepped bearing (31) and said stop (32) being positioned between said nut (12) and said spring (35).

7. Rudder bar (10) according to any one of Claims 1 to 6, **characterised in that** each pedal (2, 3) is rotatably movable about a second axis (A2) substantially parallel to said first axis (A1).

8. Rudder bar (10) according to Claim 7, **characterised in that** said rudder bar (10) comprises a pivoting link with a bearing made of elastomer (37) along said second axis (A2) between said rudder bar elongate member (1) and each pedal (2, 3) such that the position of each pedal (2, 3) is capable of being adapted about said second axis (A2) to the position of a foot of a pilot of said aircraft, irrespective of the angular position of said rudder bar body (4) about said first axis (A1).

9. Rudder bar (10) according to any one of Claims 7 to 8, **characterised in that** said rudder bar (10) comprises a servo system connecting said pedals (2, 3) to each other and to said rudder bar elongate member (1) such that the position of each pedal (2, 3) is capable of being adapted about said second axis (A2) to the position of a foot of a pilot of said aircraft, irrespective of the angular position of said rudder bar body (4) about said first axis (A1), said pedals therefore being parallel to each other.

10. Rudder bar (10) according to any one of Claims 1 to 9, **characterised in that** each pedal (2, 3) is rotatably movable about a third axis (A3), said third axis (A3) being substantially perpendicular to said first axis (A1) and to said plane of symmetry (PS), such that the comfort of a pilot of said aircraft is improved.

11. Rudder bar (10) according to any one of Claims 1 to 9, **characterised in that** each pedal (2, 3) is rotatably movable about a third axis (A3), said third axis (A3) being substantially perpendicular to said first axis (A1) and to said plane of symmetry (PS), and said rudder bar (10) comprising a servocontrol (9) for each pedal (2, 3), each servocontrol (9) being positioned close to a pedal (2, 3) and connected to said rudder bar elongate member (1) such that an action of a pilot's foot on a pedal (2, 3) about said third axis (A3) acts on said servocontrol (9), each servocontrol (9) being capable of being connected to a braking system of at least one wheel of a landing gear of said aircraft.

12. Rudder bar (10) according to any one of Claims 1 to 11, **characterised in that** said rudder bar (10) comprises at least one ball bearing (11) providing rotational guidance between said shaft (5) and said structure (6), at least one ball bearing (11) comprising position sensors whereby the angular position of said shaft (5) can be defined.

13. Aircraft, **characterised in that** said aircraft comprises a seat (18) intended for a pilot of said aircraft and a rudder bar (10) according to any one of Claims 1 to 12.
